# FASCICULE DE BREVET EUROPEEN

(11) **EP 3 110 540 B1**
(45) Date de publication et mention de la délivrance du brevet: **01.11.2017**
(21) Numéro de dépôt: 15704300.1
(22) Date de dépôt: 11.02.2015
(51) Int. Cl.: B01J 8/12

(54) **REACTEUR CATALYTIQUE EN LIT MOBILE PERMETTANT DE FAIRE FACE A DES INTERRUPTIONS DE CIRCULATION DU CATALYSEUR ET PROCEDE UTILISANT LEDIT REACTEUR**
WIRBELBETTKATALYSATOR ZUR ERMÖGLICHUNG DER HANDHABUNG VON UNTERBRECHUNGEN IM FLUSS DES KATALYSATORS UND VERFAHREN MIT DIESEM REAKTOR
MOVING-BED CATALYTIC CONVERTER THAT MAKES IT POSSIBLE TO DEAL WITH INTERRUPTIONS IN THE FLOW OF THE CATALYST AND PROCESS USING SAID REACTOR

(30) Priorité: 27.02.2014 FR 1451613
(43) Date de publication de la demande: 04.01.2017
(73) Titulaire: AXENS, 92508 Rueil Malmaison Cedex (FR)
(72) Inventeur: LAMBERT, Fabian, F-78400 Chatou (FR)
(74) Mandataire: Schmitt, Nicolas A.J.
(86) Numéro de dépôt international: PCT/EP2015/052863
(87) Numéro de publication internationale: WO 2015/128191

(56) Documents cités:
- EP-A1- 0 577 118
- FR-A1- 2 924 625
- FR-A1- 2 966 751
- US-A- 4 040 794

## Description

### CONTEXTE DE L'INVENTION

La présente invention concerne le domaine des réacteurs en lit mobile utilisés dans certains procédés de raffinage et de pétrochimie, tel que par exemple le reformage catalytique des essences, ou la production de BTX (Benzène Toluène et Xylènes), qui sont opérés le plus souvent avec une régénération en continue du catalyseur.

Les procédés catalytiques opérés en lit mobile de catalyseur permettent de régénérer le catalyseur en continu. Toutefois, pour des motifs de maintenance de l'unité ou en raison de dysfonctionnements possibles, il peut arriver que la circulation du catalyseur soit ralentie, voire arrêtée temporairement.

Lorsque la circulation du catalyseur n'est pas continue mais périodique, il peut arriver que la périodicité ne soit pas bien adaptée ou se dérègle en cours de fonctionnement engendrant ainsi un arrêt prolongé de la circulation du catalyseur.

Lorsque l'arrêt de la circulation du catalyseur est concomitant avec un refroidissement des internes du réacteur, il en résulte une modification de la géométrie de ces internes, conduisant à une diminution du volume disponible pour le catalyseur très peu compressible en tant que solide, qui peut engendrer localement une augmentation des efforts sur certaines parties internes.

Ainsi par exemple, dans des réacteurs de reformage catalytique, l'arrêt de la circulation du catalyseur peut dans certains cas engendrer une diminution du diamètre et de la hauteur des grilles formant le panier contenant le catalyseur et ainsi générer une pression supplémentaire sur les grilles du panier.

On entend par panier dans toute la suite du texte l'enveloppe de forme généralement, mais pas obligatoirement, annulaire qui contient le catalyseur et dont les parois latérales laissent passer les réactifs et les effluents réactionnels.

La compressibilité du catalyseur étant très faible, cela se traduit par une détérioration définitive des grilles, voire un arrachage des fixations des grilles en fond de réacteur, et donc le passage de catalyseur dans des parties internes dudit réacteur qui ne sont pas prévues pour contenir du catalyseur.

Ces détériorations conduisent à des perturbations plus ou moins graves du bon fonctionnement du procédé.

Les conséquences peuvent être une perte de performance, allant jusqu'à la non opérabilité de l'unité, et donc la nécessité d'intervenir sur l'équipement, induisant des arrêts plus ou moins prolongés.

La présente invention permet d'éliminer les risques associés avec l'arrêt de la circulation du catalyseur décrits ci-avant.

### ART ANTERIEUR

L'art antérieur dans le domaine des réacteurs en écoulement de type lit mobile, notamment le reformage catalytique des essences est très vaste.

Nous nous limitons ici aux documents qui décrivent des configurations typiques de réacteurs en lit mobile.

Les brevets US 3,864,240, US 4,040,794, FR 2 160 269 et FR 2 946 660 décrivent différents types de réacteurs en lit mobile pouvant notamment être utilisés dans un procédé de reformage catalytique des essences. Dans ce type de procédé, le catalyseur circule entre les différents réacteurs de la section réactionnelle, le plus souvent 4 réacteurs, puis vers le régénérateur.

Le catalyseur régénéré est ensuite renvoyé vers la section réactionnelle.

Selon d'autres variantes telles que décrites dans le document US 3,706,536, les différentes zones catalytiques sont empilées (« stacked reactor » dans la terminologie anglo saxonne) pour ne former qu'un seul réacteur comprenant les différentes sections réactionnelles entre lesquelles le catalyseur circule.

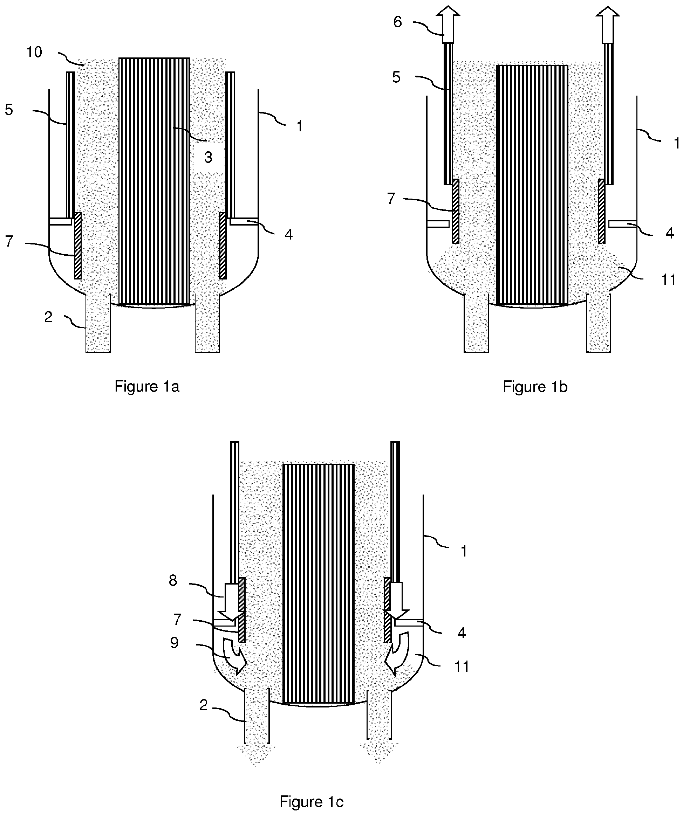

Il est également possible d'associer un réacteur comprenant plusieurs sections réactionnelles empilées avec un ou plusieurs autres réacteurs comprenant une ou plusieurs sections réactionnelles (décrit dans FR 2160269 figure 1).

Moyennant éventuellement certaines adaptations facilement accessibles à l'homme du métier, la présente invention concerne aussi bien les modes de réalisation comprenant des réacteurs séparés que des zones réactionnelles empilées.

### DESCRIPTION SOMMAIRE DES FIGURES

La figure 1a représente une vue de la partie inférieure du réacteur (1) dans lequel on distingue le collecteur central (3), la paroi externe (5) du panier, les bavettes sensiblement verticales (7) prolongeant la paroi externe du panier et fixées à cette dernière, les supports (4) sur lesquels reposent le panier.
   Le catalyseur occupe tout l'espace compris entre la paroi externe du panier et le collecteur central (3). En fonctionnement normal le catalyseur s'écoule par les jambes (2).
La figure 1b représente la même vue de la partie inférieure du réacteur (1), mais en cas d'interruption de la circulation du catalyseur. L'ensemble du panier (5) et les bavettes solidaires (7) sont remontés vers le haut (sens de la flèche).
   Le catalyseur occupe la partie, dite zone de stockage, libérée par la remontée du panier (5).
La figure 1c représente toujours la partie inférieure du réacteur (1), lorsque la circulation du catalyseur est rétablie. Le panier (5) et les bavettes solidaires (7) redescendent dans leur position normale, et le catalyseur emmagasiné dans la zone de stockage est remis en circulation vers les jambes de circulation (2).

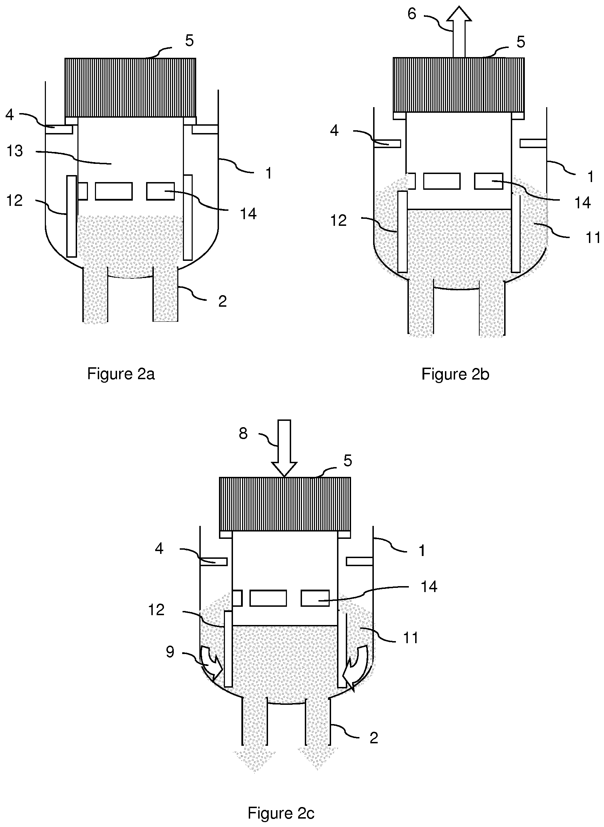

La figure 2a représente une vue de la partie inférieure du réacteur (1) dans la variante de la présente invention selon laquelle le panier (5) est équipé dans sa partie inférieure d'une bavette (13) comprenant des fenêtres (14). La bavette (13) du panier (5) peut coulisser dans un fourreau (12).
   Le point de vue adopté sur les figures 2a, 2b et 2c fait face aux bavettes (5). On ne voit donc plus le collecteur central (3), qui est toutefois présent.
   Dans la figure 2a, le panier amovible (5) est en position basse et repose sur les supports (4).
   Dans cette configuration, les fenêtres (14) de la bavette (13) en partie basse du panier sont masquées par le fourreau (12). Le catalyseur est donc maintenu dans le panier (5).
La figure 2b représente la même vue de la partie inférieure du réacteur (1) mais en cas d'interruption de la circulation du catalyseur. L'ensemble du panier (5) et les bavettes solidaires (13) sont remontés vers le haut (sens de la flèche 6).
   Le catalyseur occupe la partie, dite zone de stockage (11), libérée par la remontée du panier (5) en s'écoulant par les fenêtres (14). La remontée de la bavette (13) est canalisée par les fourreaux (12).
La figure 2c représente toujours la partie inférieure du réacteur (1), lorsque la circulation du catalyseur est rétablie. Le panier (5) et les bavettes solidaires (13) redescendent dans leur position normale (selon la flèche 8), et le catalyseur emmagasiné dans la zone de stockage (11) est remis en circulation vers les jambes de circulation (2) en passant dans l'espace laissé libre entre les fourreaux (12) et le fond du réacteur (flèche 9).

### DESCRIPTION SOMMAIRE DE L'INVENTION

L'invention consiste essentiellement à modifier les réacteurs à lit mobile en incorporant dans ces réacteurs des paniers mobiles qui, lorsqu'ils sont soulevés par une contrainte particulière, permettent au catalyseur d'être transféré dans une zone de stockage tampon. On entend par réacteur à lit mobile tout type de réacteur dans lequel le catalyseur s'écoule de manière continue ou temporaire depuis la zone réactionnelle jusqu'à une zone de régénération. Dans cette définition, on ne préjuge pas de la manière dont la charge circule au sein du lit catalytique en mouvement.

Dans les unités de type reformage catalytique des essences, l'écoulement de la charge est globalement perpendiculaire à l'écoulement du catalyseur et s'effectue depuis la périphérie vers un collecteur central. Un écoulement de la charge en sens inverse est également possible. Le catalyseur est contenu dans des paniers constitués de grilles dont les parois latérales permettent l'admission de la charge et le transfert vers le collecteur central.

Les paniers ont un point fixe situé à la partie supérieure généralement de forme conique. Lorsque la circulation de catalyseur s'interrompt, le catalyseur se tasse dans ladite partie supérieure.

Le refroidissement généralement concomitant à l'interruption de la circulation du catalyseur, induit un retrait sur l'ensemble des paniers qui ont donc tendance à remonter vers le haut. Selon la présente invention, la configuration du bas du réacteur permet donc le dégagement d'un espace appelé zone de stockage, qui permet au catalyseur d'occuper ledit espace.

Dans un second temps, le catalyseur emmagasiné dans la zone de stockage est réintroduit dans la circulation normale du catalyseur.

Plus précisément, la présente invention peut se définir comme un réacteur catalytique mettant en oeuvre un catalyseur en lit mobile dans lequel le catalyseur est enfermé dans des paniers (5) de forme annulaire dont les parois sont constituées de grilles laissant passer la charge de l'extérieur vers l'intérieur du panier, puis les effluents réactionnels de l'intérieur du panier vers un collecteur central (3), ou bien en sens inverse, ledit réacteur étant caractérisé par le fait que les paniers (5) enfermant le catalyseur sont mobiles selon un axe sensiblement vertical et sont munis dans le prolongement de leur paroi verticale de bavettes (7) implantées dans le prolongement de la paroi latérale desdits paniers, qui lors d'une interruption de la circulation du catalyseur, libèrent un espace de stockage (11) du catalyseur dans la partie inférieure du réacteur, le catalyseur étant remis en circulation par gravité dès que la circulation est rétablie.

Dans une variante préférée de la présente invention, le réacteur catalytique de raffinage en lit mobile utilise des bavettes (7) coulissant dans des fourreaux verticaux (12) et sont munis de fenêtres (14) obstrués par les fourreaux (12) en circulation normale, lesdites fenêtres (14) étant libérées lors d'une élévation du panier (5) suite à une interruption de la circulation, permettant ainsi le passage du catalyseur à travers les dites fenêtres (14) vers la zone de stockage (11) située dans la partie inférieure du réacteur entre le fourreau (12) et la paroi du catalyseur.

Selon une variante encore préférée de la présente invention, les fenêtres (14) ont une forme rectangulaire permettant une entrée régulière de catalyseur dans la zone de stockage (11).

Selon une autre variante préférée de la présente invention, les fenêtres (14) ont une forme triangulaire, la pointe du triangle étant dirigée vers le haut, de manière à permettre une entrée progressive du catalyseur dans la zone de stockage (11).

Le réacteur catalytique en lit mobile selon la présente invention peut s'appliquer à tout procédé faisant appel à un écoulement du catalyseur en lit mobile, dans lequel le catalyseur est contenu dans des paniers au sens défini plus haut. Parmi les procédés en lit mobile, on peut citer par exemple le reformage catalytique des essences.

Plus généralement, le réacteur catalytique en lit mobile selon la présente invention peut s'appliquer à tout procédé faisant appel à une circulation du catalyseur en lit mobile, tel que par exemple, certains procédés d'hydrotraitement de résidus, des procédés d'hydroconversion, d'hydrodésulfuration ou d'hydrodémétallation de résidus issus par exemple d'une distillation atmosphériques ou d'une distillation sous-vide d'un brut pétrolier.

### DESCRIPTION DETAILLEE DE L'INVENTION

Dans un réacteur de reformage catalytique en continu de type lit mobile, le catalyseur passe dans plusieurs zones réactives successives, ou réacteurs, avant d'être envoyé vers un régénérateur.

Chaque réacteur comprend au moins une, voire plusieurs zones catalytiques successives, dans lesquelles un lit de catalyseur descend lentement en continu ou périodiquement, sous la forme d'une colonne ininterrompue de grains de catalyseurs.

La charge circule dans chaque zone catalytique suivant un écoulement sensiblement radial, généralement de la périphérie vers le centre et à travers les zones catalytiques en mouvement vertical descendant. Une circulation de la charge depuis le centre vers la périphérie est également possible.

La charge traverse donc chaque zone catalytique selon une direction sensiblement perpendiculaire à celle de l'écoulement du catalyseur.
Le catalyseur est introduit en haut du réacteur dans un espace délimité par une paroi présentant des entrées/sorties.

Le catalyseur s'écoule progressivement par gravité de haut en bas de la zone catalytique et est soutiré par le bas par tout moyen approprié, par exemple un élévateur (dit « lift » selon la terminologie anglo-saxonne) permettant de le transporter de la partie inférieure d'un réacteur donné dans la partie supérieure de la zone catalytique du réacteur suivant, ou vers le régénérateur situé après le dernier réacteur de la série.

Une série comporte généralement de 3 à 4 réacteurs fonctionnant en série.

L'élévateur utilise un fluide moteur, par exemple un gaz, de préférence de l'hydrogène. Un tel agencement est en particulier décrit dans le brevet FR 2 160 269.

Dans ce type de technologie avec circulation du catalyseur en écoulement descendant, le catalyseur est maintenu dans une zone annulaire délimitée par des grilles formant un panier de forme sensiblement annulaire.

De telles grilles sont par exemple décrites dans les brevets FR 2 961 215 et FR 2 966 751.

Les grilles souvent de type grille « Johnson » permettent à la fois le bon écoulement du catalyseur aux parois desdites grilles, et le passage à courant croisé de la charge, puis la traversée des effluents réactionnels vers le collecteur central.

Des variations de conditions opératoires en opération, par exemple un réchauffement ou un refroidissement plus ou moins important, voire un arrêt d'urgence peuvent engendrer des déformations (dilatations ou rétractations différentielles importantes) au niveau des internes du réacteur.

Ces déformations peuvent engendrer une augmentation des efforts sur les grilles.

L'utilisation de paniers mobiles selon l'invention dans des réacteurs en lit mobile permet de palier à ces inconvénients en permettant au catalyseur d'avoir accès à des volumes internes au réacteur, disponibles pour emmagasiner une partie dudit catalyseur, et ainsi de diminuer voire d'éliminer totalement les efforts susceptibles de s'exercer sur la grille en cas de refroidissement. Ainsi, déformation ou arrachage de la grille peuvent être évités.

La description qui suit permet de mieux comprendre l'invention au moyen des figures 1a, 1b, 1c et 2a, 2b et 2c.

Les figures 1a, 1b et 1c décrivent une première variante dans laquelle un panier mobile (5) contenant le catalyseur est équipé d'une bavette (7) qui descend au fond du réacteur sans reposer sur la partie inférieure du réacteur.

De préférence ledit panier (5) est construit avec des grilles de type Johnson qui sont constituées d'un réseau de fils verticaux régulièrement espacés et maintenu en place par des fils horizontaux soudés aux fils verticaux.

Le panier repose sur un anneau support (4) soudé à la virole.

Dans les figures 1a, 1b, 1c, le réacteur 1 est équipé de jambes 2 permettant la descente du catalyseur et d'un conduit central 3 (dit « center pipe » selon la terminologie anglo-saxonne) qui permet la collecte des effluents réactionnels.

Le panier mobile (5) retient le catalyseur (10) entre la paroi et le conduit central (3). Ce panier (5) est équipé dans sa partie basse de bavettes (7) sensiblement verticales et guidées par le support annulaire de la grille. La verticalité peut être évaluée par l'angle formé entre les bavettes (7) et la verticale, et se situe entre 0 et 10°, préférentiellement entre 0 et 5 °, et préférentiellement encore entre 0 et 2°.

Dans la figure 1a, le panier mobile (5) est en position basse et repose sur les supports horizontaux (4). Le catalyseur est maintenu entre le conduit central (3) et la paroi du panier (5) prolongées par les bavettes sensiblement verticales (7).

Lors d'un arrêt de la circulation du catalyseur concomitant à un refroidissement des internes, des efforts radiaux et un effort ascendant sont exercés sur les grilles du panier (5). L'effort ascendant résulte principalement du fait de l'incompressibilité du catalyseur, alors que le panier d'une géométrie relativement élancée se rétracte sur sa longueur.

Le haut du panier (5) est d'une géométrie conique, cette zone étant remplie de catalyseur. Lors de l'arrêt de la circulation de catalyseur, le panier vient se poser sur le lit de catalyseur. Par rétractation longitudinale du panier lors du refroidissement, la partie supérieure du panier (5) étant en appui sur le catalyseur tassé, il en résulte une translation sensiblement verticale de la base du panier guidée par le glissement des bavettes (7) par rapport à l'anneau support (4) représenté sur la figure 1 b.

L'espace entre les bavettes (7) et le fond du réacteur s'agrandit libérant une zone de stockage (11) qui peut accueillir une partie du catalyseur et ainsi diminuer, voire annuler, l'effort exercé sur les grilles du panier (5).

Lorsque la circulation reprend dans les jambes (2), le catalyseur est envoyé vers une chambre de relevage (non représentée) du catalyseur qui permet de l'envoyer vers le réacteur suivant ou vers le régénérateur.

La zone de stockage (11) est alors progressivement vidée de manière naturelle c'est-à-dire par gravité (selon la flèche 9 de la figure 1c), et le panier redescend progressivement (selon la flèche 8 de la figure 1c) vers sa position basse correspondant à la figure 1a.

Un tel cycle peut être répété dès qu'un nouvel arrêt ou incident dans la circulation du catalyseur intervient.
Les figures 2a, 2b et 2c décrivent une deuxième variante de l'appareillage selon l'invention.

Dans cette série de figures, le conduit central (3) de la figure (1) n'a pas été représenté afin de mieux comprendre l'invention.

Les figures 2a, 2b, 2c correspondent à un point de vue qui fait face aux bavettes (13).

Selon cette variante, le panier (5) est équipé en partie basse d'une bavette (13) comprenant des fenêtres (14). La bavette (13) du panier peut coulisser dans un fourreau (12).

Le fourreau (12) est ajouré à sa base (non représenté sur la figure) pour permettre l'écoulement du catalyseur accumulé dans la zone de stockage (11), vers les jambes de circulation (2), lors de la reprise de la circulation du catalyseur.

Dans la figure 2a, le panier amovible (5) repose sur les supports (4) et est donc en position basse.

Dans cette configuration, les fenêtres (14) de la bavette (13) en partie basse du panier sont masquées par le fourreau (12). Le catalyseur est donc maintenu dans le panier.

La figure 2b montre la situation d'une interruption de la circulation du catalyseur. En cas d'effort exercé suite à l'arrêt de la circulation du catalyseur, le panier amovible (5) est libre de remonter selon la flèche 6, et les fenêtres (14) sont progressivement mises à jour, autorisant ainsi l'accès du catalyseur à la zone de stockage (11).

Le catalyseur passe en effet au travers des fenêtres (14) et se retrouve dans la partie inférieure du réacteur (11), de l'autre côté des fourreaux (12).

La figure 2c correspond à la reprise de circulation du catalyseur. Lorsque la circulation du catalyseur reprend, le catalyseur s'écoule de la zone de stockage (11) vers les jambes de circulation (2) grâce aux ouvertures localisées à la base du fourreau (12) non représentées sur la figure 2c, et par l'espace laissé libre entre l'extrémité inférieure des fourreaux (12) et le fond du réacteur.

Le catalyseur libère progressivement la zone de stockage (11) et le panier (5) redescend progressivement (selon la flèche 8 de la figure 2c), jusqu'à reposer à nouveau sur les supports (4). Les fenêtres (14) sont alors à nouveau occultées par le fourreau (12).

Différentes géométries des fenêtres (14) peuvent permettre d'obtenir des transferts de catalyseur plus ou moins progressifs vers la zone de stockage (11).
Par exemple :
- Des fenêtres rectangulaires permettent de libérer une quantité de catalyseur identique par unité de translation du panier vers le haut.
- Des fenêtres triangulaires pointant vers le haut, ou trapézoïdales petit côté vers le haut, permettent de libérer une quantité de catalyseur plus importante au fur et à mesure que le panier s'élève.
- Des fenêtres triangulaires pointe vers le bas, ou trapézoïdales petit côté vers le bas, permettent de libérer une quantité de catalyseur très importante dès le soulèvement du panier.
- Des fenêtres sur plusieurs rangées avec des géométries identiques ou différentes peuvent aussi être envisagées pour obtenir une libération du catalyseur ajustée par niveau d'élévation du panier.

En résumé, l'invention concerne un réacteur catalytique mettant en oeuvre un catalyseur en lit mobile dans lequel le catalyseur est enfermé dans des paniers (5) et dans lequel lesdits paniers sont mobiles selon un axe sensiblement vertical et munis de bavettes (7,13) elles-mêmes sensiblement verticales, implantées à la partie inférieure desdits paniers, et dans lequel lors d'une interruption de la circulation du catalyseur, un espace de stockage (11) du catalyseur situé dans la partie inférieure du réacteur est libéré.

L'invention concerne également un procédé de raffinage ou de pétrochimie utilisant le réacteur selon l'invention. De préférence, ledit procédé est un procédé de reformage catalytique des essences, selon une autre variante ledit procédé est un procédé d'hydrotraitement de résidus.

L'invention concerne donc également un procédé catalytique de raffinage mettant en oeuvre un catalyseur en lit mobile dans lequel le catalyseur est enfermé dans des paniers (5) et dans lequel lesdits paniers sont mobiles selon un axe sensiblement vertical et munie de bavettes (7,13) elles-mêmes sensiblement verticales, implantées à la partie inférieure desdits paniers, et dans lequel lors d'une interruption de la circulation du catalyseur, un espace de stockage (11) du catalyseur situé dans la partie inférieure du réacteur est libéré.

Dans le réacteur ou le procédé selon l'invention, les variantes ou préférences suivantes peuvent être mises en oeuvre :
De préférence, ledit catalyseur peut être remis en circulation par gravité des que la circulation est rétablie.

De manière plus préférée, ledit catalyseur peut être enfermé dans des paniers (5) de forme annulaire dont les parois sont constituées de grilles laissant passer la charge de l'extérieur vers l'intérieur du panier, puis les effluents réactionnels de l'intérieur du panier vers un collecteur central.

Selon une variante préférée, le réacteur catalytique ou le procédé mettant en oeuvre un catalyseur en lit mobile selon l'invention peut comprendre comprend des bavettes (7,13) qui coulissent dans des fourreaux verticaux (12) et sont munis de fenêtres (14) obstruées par les fourreaux (12) en circulation normale, lesdites fenêtres (14) étant libérées lors d'une élévation du panier (5) suite à une interruption de la circulation, permettant ainsi le passage du catalyseur à travers les dites fenêtres (14) vers un espace de stockage (11) situé dans la partie inférieure du réacteur entre le fourreau (12) et la paroi du catalyseur.

De préférence, lesdites fenêtres (14) ont une forme rectangulaire permettant une entrée régulière de catalyseur dans la zone de stockage (11).

Selon une autre variante, lesdites fenêtres (14) ont une forme triangulaire, la pointe du triangle étant dirigée vers le haut, de manière à permettre une entrée progressive du catalyseur dans la zone de stockage (11).

### AVANTAGE DE L'INVENTION PAR RAPPORT A L'ART ANTERIEUR

Les solutions de l'art antérieur permettant d'éviter l'accumulation d'efforts sur les grilles lors d'un arrêt de circulation de catalyseur et du refroidissement concomitant font intervenir un dispositif de transfert de catalyseur dit élévateur additionnel tel que décrit dans le brevet FR 2 160 269.

Cet élévateur additionnel fonctionne généralement avec un gaz dont la disponibilité peut être assurée à tout moment, typiquement de l'azote.

La mise en oeuvre d'un élévateur additionnel nécessite cependant une action de l'opérateur visant à mettre en ligne l'équipement de secours en supposant que les conditions opératoires pour assurer le transfert de catalyseur soient atteintes rapidement. L'opérateur doit également se préoccuper de préserver l'intégrité d'autre équipements qui pourraient être affectés par l'incident.

La solution proposée dans la présente invention ne fait intervenir aucun équipement supplémentaire et utilise une zone du réacteur, c'est-à-dire la partie inférieure dudit réacteur, dans laquelle le catalyseur circulait imparfaitement selon l'art antérieur.

En effet le catalyseur circulant habituellement dans cette zone est peu ou pas exploité car il est généralement mal balayé par le gaz du procédé.

En laissant libre ladite zone et en l'utilisant en tant que zone de stockage temporaire du catalyseur, la présente invention propose une solution intéressante sans modification majeure de la conception classique du réacteur.
Elle apporte l'avantage supplémentaire de ne pas nécessiter l'intervention d'un opérateur puisqu'on utilise le comportement naturel de l'équipement face à un événement extérieur pour contrer les effets potentiellement négatifs dudit évènement extérieur.

La fiabilité et la réactivité de la solution selon la présente invention ne dépend donc pas du délai ni de la justesse d'intervention d'un opérateur, et n'est sujet à aucun risque d'erreur extérieure, comme par exemple la dérive d'un instrument de mesure.

## Revendications

1. Réacteur catalytique mettant en oeuvre un catalyseur en lit mobile dans lequel le catalyseur est enfermé dans des paniers (5) et dans lequel lesdits paniers sont mobiles selon un axe sensiblement vertical et munis de bavettes (7) elles-mêmes sensiblement verticales, implantées à la partie inférieure desdits paniers (5), et dans lequel lors d'une interruption de la circulation du catalyseur, un espace de stockage (11) du catalyseur situé dans la partie inférieure du réacteur est libéré en remontant vers le haut l'ensemble du panier (5) et des bavettes solidaires (7).

2. Réacteur catalytique selon la revendication 1, dans lequel le catalyseur est remis en circulation par gravité des que la circulation est rétablie.

3. Réacteur catalytique en lit mobile selon l'une des revendications 1 ou 2, dans lequel le catalyseur est enfermé dans des paniers (5) de forme annulaire dont les parois sont constituées de grilles laissant passer la charge de l'extérieur vers l'intérieur du panier (5), puis les effluents réactionnels de l'intérieur du panier (5) vers un collecteur central (3).

4. Réacteur catalytique en lit mobile selon l'une des revendication 1 à 3, dans lequel les bavettes (7,13) coulissent dans des fourreaux verticaux (12) et sont munis de fenêtres (14) obstrués par les fourreaux (12) en circulation normale, lesdites fenêtres (14) étant libérées lors d'une élévation du panier (5) suite à une interruption de la circulation, permettant ainsi le passage du catalyseur à travers les dites fenêtres (14) vers un espace de stockage (11) situé dans la partie inférieure du réacteur entre le fourreau (12) et la paroi du catalyseur.

5. Réacteur catalytique en lit mobile selon la revendication 4, dans lequel les fenêtres (14) ont une forme rectangulaire permettant une entrée régulière de catalyseur dans la zone de stockage (11).

6. Réacteur catalytique en lit mobile selon la revendication 4, dans lequel les fenêtres (14) ont une forme triangulaire, la pointe du triangle étant dirigée vers le haut, de manière à permettre une entrée progressive du catalyseur dans la zone de stockage (11).

7. Procédé de raffinage ou de pétrochimie utilisant le réacteur selon l'une quelconque des revendications 1 à 6.

8. Procédé de reformage catalytique des essences utilisant le réacteur selon l'une quelconque des revendications 1 à 6.

9. Procédé d'hydrotraitement de résidus utilisant le réacteur selon l'une quelconque des revendications 1 à 6.

## Patentansprüche

1. Katalytischer Reaktor, der einen Katalysator im beweglichen Bett verwendet, wobei der Katalysator in Körben (5) eingeschlossen ist und wobei die Körbe entlang einer im Wesentlichen vertikalen Achse beweglich sind und mit Klappen (7) versehen sind, die selbst im Wesentlichen vertikal sind, die im unteren Teil der Körbe (5) eingesetzt sind, und wobei während einer Unterbrechung der Zirkulation des Katalysators ein Speicherraum (11) des Katalysators, der sich in dem unteren Teil des Reaktors befindet, freigegeben wird, indem die Anordnung des Korbes (5) und der fest verbundenen Klappen (7) nach oben geführt wird.

2. Katalytischer Reaktor nach Anspruch 1, wobei der Katalysator durch Schwerkraft zur Zirkulation zurückgeführt wird, sobald die Zirkulation wieder hergestellt worden ist.

3. Katalytischer Reaktor im beweglichen Bett nach einem der Ansprüche 1 oder 2, wobei der Katalysator in ringförmigen Körben (5) eingeschlossen ist, deren Wände aus Gittern gebildet sind, die die Beschickung vom Äußeren zum Inneren des Korbes (5) und dann die Reaktionsabströme vom Inneren des Korbes (5) zu einem zentralen Sammler (3) durchgehen lassen.

4. Katalytischer Reaktor im beweglichen Bett nach einem der Ansprüche 1 bis 3, wobei die Klappen (7, 13) in vertikalen Buchsen (12) gleiten und mit Fenstern (14) versehen sind, die bei normaler Zirkulation durch die Buchsen (12) versperrt sind, wobei die Fenster (14) bei einem Anheben des Korbes (5) nach einer Unterbrechung der Zirkulation freigegeben werden, wodurch auf diese Weise der Durchgang des Katalysators durch die Fenster (14) zu einem Speicherraum (11) ermöglicht wird, der sich in dem unteren Teil des Reaktors zwischen der Buchse (12) und der Wand des Katalysators befindet.

5. Katalytischer Reaktor im beweglichen Bett nach Anspruch 4, wobei die Fenster (14) eine rechteckige Form aufweisen, die ein regelmäßiges Einlassen des Katalysators in den Speicherbereich (11) ermöglicht.

6. Katalytischer Reaktor im beweglichen Bett nach Anspruch 4, wobei die Fenster (14) eine dreieckige Form aufweisen, wobei die Spitze des Dreiecks derart nach oben gerichtet ist, um ein allmähliches Einlassen des Katalysators in den Speicherbereich (11) zu ermöglichen.

7. Raffinations- oder Petrochemieverfahren, das den Reaktor nach einem der Ansprüche 1 bis 6 verwendet.

8. Verfahren zur katalytischen Reformierung von Benzinen, das den Reaktor nach einem der Ansprüche 1 bis 6 verwendet.

9. Hydrobehandlungsverfahren von Rückständen, das den Reaktor nach einem der Ansprüche 1 bis 6 verwendet.

## Claims

1. A catalytic reactor employing a moving bed catalyst, in which the catalyst is enclosed in baskets (5) and in which said baskets are movable along a substantially vertical axis and provided with flaps (7) which are themselves substantially vertical, installed in the lower portion of said baskets (5), and in which, during an interruption to the circulation of catalyst, a storage space (11) for catalyst located in the lower portion of the reactor is opened up by lifting the assembly of the basket (5) and the attached flaps (7) upwards.

2. The catalytic reactor according to claim 1, in which circulation of the catalyst under gravity is resumed as soon as the circulation is re-established.

3. The moving bed catalytic reactor according to claim 1 or claim 2, in which the catalyst is enclosed in baskets (5) which are annular in shape, wherein the walls are constituted by screens which allow the feed to pass from the exterior towards the interior of the basket (5), then the reaction effluents to pass from the interior of the basket (5) towards a centre pipe (3).

4. The moving bed catalytic reactor according to one of claims 1 to 3, in which the flaps (7, 13) slide in vertical sleeves (12) and are provided with windows (14) which are obstructed by the sleeves (12) during normal circulation, said windows (14) being opened up when the basket (5) is lifted following an interruption to the circulation, thus allowing the catalyst to pass through said windows (14) towards a storage zone (11) located in the lower portion of the reactor between the sleeve (12) and the wall of the catalyst.

5. The moving bed catalytic reactor according to claim 4, in which the windows (14) are rectangular in shape so as to allow the catalyst to enter the storage zone (11) in a uniform manner.

6. The moving bed catalytic reactor according to claim 4, in which the windows (14) are triangular in shape, with the point of the triangle being directed upwardly, so as to allow the catalyst to enter the storage zone (11) in a steady manner.

7. A refining or petrochemical process using the reactor according to any one of claims 1 to 6.

8. A process for the catalytic reforming of gasolines using the reactor according to any one of claims 1 to 6.

9. A residue hydrotreatment process using the reactor according to any one of claims 1 to 6.
